# EUROPÄISCHE PATENTSCHRIFT

(11) **EP 2 462 007 B1**
(45) Veröffentlichungstag und Bekanntmachung des Hinweises auf die Patenterteilung: **01.06.2016**
(21) Anmeldenummer: 10739613.7
(22) Anmeldetag: 02.08.2010
(51) Int. Cl.: B60R 11/04, G01S 7/481, G01S 17/93, B32B 17/10

(54) **SCHEIBE MIT OPTISCH TRANSPARENTEM SENSORFELD**
PANE WITH OPTICALLY TRANSPARENT SENSOR FIELD
VITRE AYANT UN CHAMP DE DETECTION OPTIQUEMENT TRANSPARENT

(30) Priorität: 04.08.2009 DE 102009026319
(43) Veröffentlichungstag der Anmeldung: 13.06.2012
(73) Patentinhaber: Saint-Gobain Glass France, 92400 Courbevoie (FR)
(72) Erfinder: ARSLAN, Ilkay, 52074 Aachen (DE); WOHLFEIL, Dirk, B-4730 Raeren (BE)
(74) Vertreter: Lendvai, Tomas
(86) Internationale Anmeldenummer: PCT/EP2010/061207
(87) Internationale Veröffentlichungsnummer: WO 2011/015551

(56) Entgegenhaltungen:
- WO-A1-2010/149649
- DE-A1-102004 016 517
- DE-A1-102004 059 132
- DE-A1-102007 012 993
- US-A1- 2006 171 704

## Beschreibung

Die Erfindung bezieht sich auf eine Scheibe mit optisch transparenten Sensorfeld, ein Verfahren zu deren Herstellung und deren Verwendung.

Viele Fahrzeuge, Flugzeuge, Hubschrauber und Schiffe sind mit verschiedenen optischen Sensoren ausgestattet. Beispiele für optische Sensoren sind Kamerasysteme wie Videokameras, Nachtsichtkameras, Restlichtverstärker oder passive Infrarotdetektoren wie FLIR (Forward Looking Infrared). Die Kamerasysteme können Licht im ultravioletten (UV), sichtbaren (VIS) und infraroten Wellenlängenbereich (IR) nutzen. Damit lassen sich auch bei schlechten Witterungsverhältnissen wie Dunkelheit und Nebel, Gegenstände, Fahrzeuge sowie Personen präzise erkennen. Diese Kamerasysteme können in Kraftfahrzeugen hinter der Windschutzscheibe im Fahrgastraum platziert werden. Damit bieten sie auch im Straßenverkehr die Möglichkeit, Gefahrensituationen und Hindernisse rechtzeitig zu erkennen.

Weitere Einsatzbereiche für optische Sensoren liegen in der elektronischen Distanzmessung (EDM), beispielsweise mit Hilfe von Laserentfernungsmessern. Hierbei kann die Entfernung zu anderen Fahrzeugen bestimmt werden. Derartige Systeme sind im militärischen Anwendungsbereich weit verbreitet, aber auch im zivilen Bereich ergeben sich viele Anwendungsmöglichkeiten. Durch Abstandsmessungen zum vorausfahrenden Fahrzeug lässt sich der notwendige Sicherheitsabstand bestimmen und die Verkehrssicherheit deutlich erhöhen. Bei automatischen Warnsystemen verringert sich die Gefahr eines Auffahrunfalls deutlich.

Aufgrund ihrer Empfindlichkeit gegenüber Witterungseinflüssen oder Fahrtwinden müssen derartige Sensoren aber in allen Fällen durch entsprechende Scheiben geschützt werden. Der Sensor kann entweder innerhalb eines Fahrzeuges angebracht sein oder außerhalb wie bei Wärmebildkameras von Hubschraubern. Hierbei ist der Sensor in einem schwenkbaren Gehäuse außen am Hubschrauber angebracht. Um eine optimale Funktion der optischen Sensoren zu gewährleisten, sind bei beiden Möglichkeiten saubere und beschlagsfreie Scheiben zwingend notwendig. Beschlag und Vereisungen behindern die Funktionsweise deutlich, da sie die Transmission elektromagnetischer Strahlung deutlich reduzieren. Insbesondere die Bildung von Wassertropfen im Strahlengang des Sensors führt durch starke Lichtreflexionen zu einer starken Einschränkung der Funktionsweise des Sensors.

DE 10 2007 001 080 A1 offenbart eine elektrisch beheizbare Fensterscheibe. Diese wird mit Hilfe von elektrischen Sammelleitern mit Strom versorgt und so geheizt. Die Anordnung der Leiter erfolgt dabei so, dass sich nur geringe elektromagnetische Felder entwickeln. Damit ist ein Betrieb von Geräten, die empfindlich auf elektromagnetische Felder reagieren, auch im Bereich der Scheibe möglich.

DE 101 56 850 A1 offenbart einen Sensor in einer Fahrzeugfensterscheibe, dessen Linse vom Fahrzeuginnenraum durch eine Einkapselung abgeschlossen ist. Dieser Aufbau verhindert die Ablagerung von Staubpartikeln auf der Linse. Zum Luftaustausch ist ein Partikelfilter vorgesehen.

DE 10 2004 054 161 A1 offenbart einen Infrarotlicht-Erfassungsbereich in einer Fahrzeugwindschutzscheibe. Der Infrarotlicht-Erfassungsbereich ist von Heizelementen umgeben, die diesen durch Wärmeleitung eis- und beschlagsfrei halten.

EP 1 605 729 A2 offenbart eine elektrisch beheizbare Scheibe mit einem Kamerafenster. Dieses Kamerafenster wird über eine Heizvorrichtung beschlags- und eisfrei gehalten. Das Heizelement wird an der Position des Kamerafensters in die Scheibe einlaminiert. Zusätzlich kann an der Scheibenoberfläche noch ein zusätzliches Heizelement angebracht werden. Das zusätzliche Heizelement wird bevorzugt als leitfähige Paste auf die Scheibenoberfläche gedruckt.

EP 0 747 460 A1 offenbart eine Antibeschlagbeschichtung für Glas- und Kunststoffsubstrate. Die Beschichtung enthält ein Polymer mit Hydroxylgruppen, einen aluminiumbasierten Crosslinker und ein Tensid.

EP 0 233 268 B1 offenbart ein Glas- oder Kunststoffsubstrat, welches mit einer Anti-Beschlag Beschichtung versehen ist. Die Polymerbeschichtung enthält ein lineares, hydrophiles Polyether-Polyurethan und zwischen 35 Gew. % und 60 Gew. % Wasser.

In vielen Scheiben mit Kamerafenstern wird auftretender Beschlag durch Heizsysteme entfernt. Dies setzt jedoch insbesondere im Randbereich der Scheibe aufwendige elektrische Kontaktierungen voraus. Zudem sind für die Kontrolle der Heizvorrichtung Steuervorrichtungen notwendig. Diese nachträglichen Einbauten sind in vielen Fällen kostspielig und nicht bei allen Fahrzeugen möglich. Zusätzlich erhöhen weitere elektrische Verbraucher den Strom- und Kraftstoffverbrauch.

Die Aufgabe der Erfindung liegt darin, eine Scheibe mit optisch transparenten Sensorfeld bereitzustellen, welche einfach aus fertigen, standardgemäßen Scheiben herstellbar ist und nicht auf eine zusätzliche Strom- und Heizquelle angewiesen ist.

Die Aufgabe der vorliegenden Erfindung wird erfindungsgemäß durch eine Scheibe mit optisch transparentem Sensorfeld, ein Verfahren zu deren Herstellung und deren Verwendung nach den unabhängigen Ansprüchen 1, 13 und 15 gelöst. Bevorzugte Ausführungen gehen aus den Unteransprüchen hervor.

Die Erfindung umfasst eine Scheibe mit einem optisch transparenten Sensorfeld. Die Scheibe umfasst mindestens eine Scheibe und ein auf der Oberfläche oder als Teil der Scheibe angeordnetes optisch transparentes Sensorfeld. Im Sinne der Erfindung umfasst der Ausdruck "optisch transparentes Sensorfeld" den Teil der Scheibe, welcher den Sensor mit den entsprechenden optischen und elektromagnetischen Informationen oder Signalen versorgt. Dies kann ein beliebiger Teil der Scheibe oder ein eingesetztes Scheiben- oder Foliensegment sein, das für die entsprechenden optischen und elektromagnetischen Signale eine hohe Transmission aufweist. Das Merkmal "optisch transparent" bezieht sich im Rahmen der Erfindung auf den Wellenlängenbereich von 200 nm bis 2000 nm, bevorzugt 400 nm bis 1300 nm. Die mittlere Transmission beträgt im Wellenlängenbereich von 400 nm bis 1300 nm, bevorzugt mehr als 70 %. Das optisch transparente Sensorfeld nimmt bevorzugt weniger als 10 %, besonders bevorzugt weniger als 5 % der Scheibenoberfläche ein.

Auf der Oberfläche der Scheibe im Bereich des optisch transparenten Sensorfeldes ist eine hydrophile Beschichtung angebracht. Die hydrophile Beschichtung kann sowohl über chemische Bindungen mit der Scheibe oder über physikalische Absorption gebunden sein. Die hydrophile Beschichtung umfasst sowohl polare organische Gruppen wie auch anorganische, bevorzugt ionische Verbindungen. Die hydrophile Beschichtung kann als ein- oder mehrschichtiger molekularer Film oder als polares organisches und/oder anorganisches Polymer ausgebildet sein. Die hydrophile Beschichtung schließt bevorzugt auch Crosslinker mit ein. Diese Verbindungen unterstützen die Bindung innerhalb der hydrophilen Beschichtung und die Bindung der hydrophilen Beschichtung mit der Scheibenoberfläche. Beispiele für geeignete Crosslinker auf Glasscheiben sind polare Silane, beispielsweise 3-Aminopropyltrimethoxysilan (C₆H₁₇NO₃Si /CAS no. 13822-56-5) oder N-(Hydroxyethyl)-N-methylaminopropyltrimethoxysilan (C₉H₂₃NO₄Si/ CAS no. 330457-46-0). Die hydrophile Beschichtung schließt im Sinne der Erfindung auch eine hydrophile wasserabsorbierende Beschichtung mit ein.

An der Oberfläche der Scheibe im Bereich des optisch transparenten Sensorfeldes sind eine Einkapselung und ein in der Einkapselung angebrachter Sensor befestigt. Die Einkapselung schützt den Sensor vor Schmutz- und Staubpartikeln sowie unerwünschten Lichteinfall. Die Einkapselung ist bevorzugt im oberen Scheibenbereich angeordnet, bevorzugt nicht mehr als 30 % der Scheibenhöhe vom oberen und/oder unteren Rand entfernt. Die Einkapselung enthält bevorzugt ein Polymer, besonders bevorzugt Polybutylenterephthalat, Polyamide, Polycarbonat, Polyurethane, Polybutylen, Polypropylen, Polyethylen, Polyethylenterephthalat, Polyvinylchlorid, Polystyrol, Acrylnitril-Butadien-Styrol, Ethylenvinylacetat, Ethylenvinylalkohol, Polyimide, Polyester, Polyketone, Polyetheretherketone, Polymethylmethacrylat, Gemische, Blockpolymere und/oder Copolymere davon.

Das Sensorfeld weist bevorzugt einen opaken und/oder farbigen Rand auf. Der Rand kann sowohl als Randstreifen oder auch als Randbereich ausgebildet sein.

Der Sensor umfasst bevorzugt Kameras für sichtbares Licht der Wellenlängen von 400 nm bis 800 nm und infrarotes Licht der Wellenlängen von 800 nm bis 1300 nm.

Der erfindungsgemäße Aufbau weist bevorzugt nur für den Sensor eine elektrische Kontaktierung auf. Das Sensorfeld und die hydrophile Beschichtung enthalten bevorzugt keine elektrische Kontaktierung und keine Heizvorrichtung. Eine Beheizung des Sensorfeldes ist wegen der hydrophilen Beschichtung nicht notwendig. Dies schließt auch die direkt angrenzenden Bereiche des Sensorfelds und der hydrophilen Beschichtung mit ein.

Die Scheibe enthält bevorzugt Glas, besonders bevorzugt Flachglas, Floatglas, Quarzglas, Borosilikatglas, Kalk-Natron-Glas, oder Polymere, bevorzugt Polymethylmethacrylat und/oder Gemische davon.

Die Scheibe umfasst bevorzugt Einscheibensicherheitsglas (ESG) oder Verbundscheibensicherheitsglas (VSG).

Das Sensorfeld weist bevorzugt eine optische Transparenz für sichtbares Licht (VIS) und/oder Infrarotstrahlung (IR) von > 60 %, bevorzugt > 70 % auf.

Die hydrophile Beschichtung enthält bevorzugt Polymere mit COH, COOH, NH, NH₂, COONH, SO₃, SO₂, CN, OCN, SCN Gruppen, besonders bevorzugt Acrylsäureester, Polyethylenglykole, Polysaccharide, Polypeptide, Polyurethane, Polyether und/oder Copolymere und/oder Gemische davon.

Die hydrophile Beschichtung enthält bevorzugt hydrophile Silane, beispielsweise 3-Aminopropyltrimethoxysilan (C₆H₁₇NO₃Si /CAS no. 13822-56-5) und/oder N-(Hydroxyethyl)-N-methylaminopropyltrimethoxysilan (C₉H₂₃NO₄Si/ CAS no. 330457-46-0), silanhaltige Polymere und/oder Copolymere und/oder Gemische davon.

Die hydrophile Beschichtung enthält bevorzugt oberflächenabsorbierte hydrophile Partikel, wie T1O₂. Insbesondere auch bei einer geringen Durchlässigkeit der Scheibe für UV-Licht können TiO₂-haltige Partikel organische Verschmutzungen auf der Scheibe zersetzen.

Die oberflächenabsorbierten hydrophilen Partikel weisen eine mittlere Partikelgröße von 2 nm bis 1 µm, bevorzugt 10 nm bis 300 nm auf.

Die hydrophile Beschichtung weist eine Schichtdicke von 10 nm bis 50 µm, bevorzugt 100 nm bis 5 µm auf.

Die hydrophile Beschichtung weist bevorzugt einen Kontaktwinkel gegenüber Wasser von < 25°, bevorzugt < 15° auf.

Die hydrophile Beschichtung enthält bevorzugt eine antistatische Beschichtung, besonders bevorzugt quaternäre Ammoniumverbindungen, Silber, Kupfer, Zinn, Gold, Aluminium, Eisen, Wolfram, Chrom und/oder Legierungen davon und/oder ein leitfähiges organisches Polymer. Die antistatische Beschichtung vermindert die Anhäufung von Staubpartikeln im Strahlengang des Sensors. Staubpartikel und daran gebundene Feuchtigkeit stören durch Lichtreflexion und Absorption die Funktionsfähigkeit des Sensors. Die antistatische Beschichtung kann sich zur Ableitung der elektrischen Potentiale auch über das eigentliche Sensorfeld hinaus ausdehnen.

Die hydrophile Beschichtung enthält bevorzugt eine Trägerfolie. Die hydrophile Beschichtung lässt sich somit einfach in dem Bereich der Scheibe aufkleben, welcher für den Strahlengang des Sensors durchlässig sein muss.

Die Trägerfolie enthält Polymere, bevorzugt Polybutylenterephthalat, Polycarbonat, Polyethylenterephthalat, Polyethylennaphthalat, Polyvinylbutyral, Polyethylen, Polypropylen, Polyurethan, Polyepoxide, Polyacrylate und/oder Polyethylvinylacetat, Gemische, Blockcopolymere und/oder Copolymere davon.

Die Trägerfolie weist bevorzugt eine optische Transparenz für sichtbares Licht und/oder Infrarotstrahlung von > 80 %, bevorzugt > 90 % auf.

Die Trägerfolie enthält bevorzugt einen Klebstoff, besonders bevorzugt Acrylatklebstoffe, Methylmethacrylatklebstoffe, Cyanacrylatklebstoffe, Polyepoxide, Silikonklebstoffe und/oder Silanvernetzende-Polymerklebstoffe, Gemische und/oder Copolymere davon. Die Trägerfolie ist bevorzugt selbstklebend.

Die Einkapselung ist bevorzugt im oberen Bereich der Windschutzscheibe, bevorzugt hinter einem Abdeckstreifen angebracht.

Die Einkapselung enthält bevorzugt Trockenmittel, besonders bevorzugt Kieselgel, CaCl₂, Na₂SO₄ Aktivkohle, Silikate, Bentonite und/oder Zeolithe.

Die Aufgabe der Erfindung wird weiter durch ein Verfahren zur Herstellung einer Scheibe mit optisch transparenten Sensorfeld gelöst, wobei in einem ersten Schritt eine hydrophile Beschichtung auf einem Sensorfeld einer Scheibe aufgebracht wird. Das Aufbringen kann beispielsweise durch Auftragen und/oder Aufsprühen erfolgen. In Abhängigkeit von der hydrophilen Beschichtung kann ein Aushärten oder Vernetzen der hydrophilen Beschichtung notwendig sein. Dies kann bevorzugt durch UV-Strahlung, thermische Behandlung oder Luftfeuchtigkeit erfolgen. In einem zweiten Schritt wird eine Einkapselung mit einem Sensor am Randbereich der hydrophilen Beschichtung angebracht. Die Einkapselung wird bevorzugt in Fahrzeugen im oberen und/oder unteren Bereich der Scheibe außerhalb des Sichtfeldes angebracht.

Die hydrophile Beschichtung wird bevorzugt über eine Trägerfolie aufgebracht und lässt sich somit einfach in dem Bereich der Scheibe aufkleben, welcher für den Strahlengang des Sensors durchlässig sein muss. Herkömmliche Scheiben lassen sich einfach und kostengünstig nachrüsten.

Die Erfindung umfasst des Weiteren die Verwendung der Scheibe mit optisch transparenten Sensorfeld in Fahrzeugen, Schiffen, Flugzeugen und Hubschraubern, bevorzugt als Windschutzscheibe und/oder Heckscheibe eines Fahrzeuges.

Im Folgenden wird die Erfindung anhand von Zeichnungen näher erläutert. Die Zeichnungen schränken die Erfindung in keiner Weise ein.

Es zeigen:
- Figur 1: eine Draufsicht auf die erfindungsgemäße Scheibe (1),
- Figur 2: einen Querschnitt einer bevorzugten Ausführungsform der erfindungsgemäßen Scheibe (1) mit dem optisch transparenten Sensorfeld (2),
- Figur 3: einen Querschnitt des optisch transparenten Sensorfelds (2),
- Figur 4: einen weiteren Querschnitt des optisch transparenten Sensorfelds (2) und
- Figur 5: einen weiteren Querschnitt des optisch transparenten Sensorfelds (2).

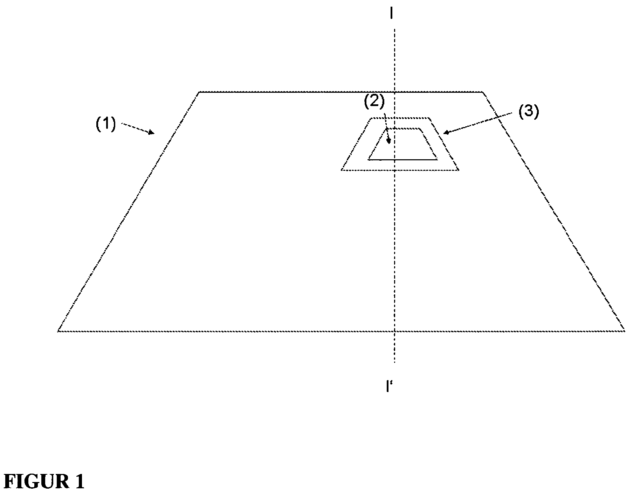

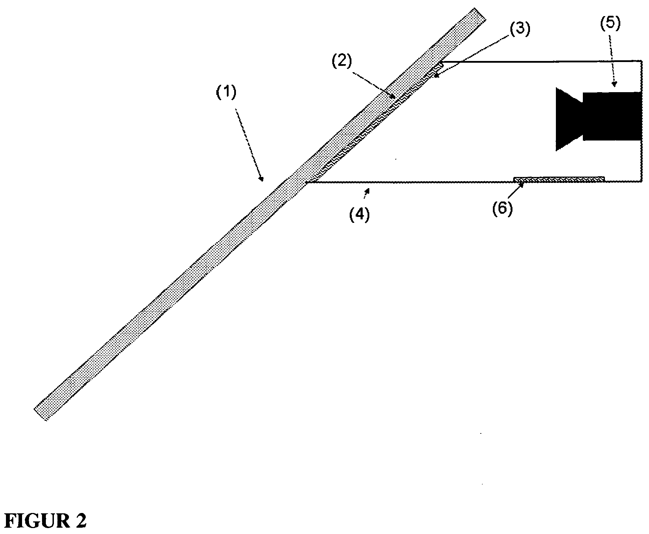

Figur 1 zeigt eine Draufsicht auf die erfindungsgemäße Scheibe (1). Auf einem optisch transparenten Sensorfeld (2) ist eine hydrophile Beschichtung (3) angeordnet. Das optisch transparente Sensorfeld (2) umfasst den Teil der Scheibe (1), welcher den in Figur 2 gezeigten Sensor (5) mit den entsprechenden optischen und elektromagnetischen Informationen oder Signalen versorgt. Dies kann ein beliebiger Teil der Scheibe (1) oder ein eingesetztes Scheibensegment sein, das für die entsprechenden optischen und elektromagnetischen Signale eine hohe Transmission aufweist.

Figur 2 zeigt einen Querschnitt entlang der Scheibenhöhe I nach I' in Figur 1 einer bevorzugten Ausführungsform der erfindungsgemäßen Scheibe (1) mit optisch transparenten Sensorfeld (2). Im Bereich des optisch transparenten Sensorfelds (2) ist eine hydrophile Beschichtung (3) auf der Scheibeninnenseite der Scheibe (1) angeordnet. Der auf das optisch transparente Sensorfeld (2) ausgerichtete Sensor (5) befindet sich in einer am optisch transparenten Sensorfeld (2) befestigten Einkapselung (4). Innerhalb der Einkapselung (4) sind Trockenmittel (6) angeordnet. Die Trockenmittel (6) sind bevorzugt in die Oberfläche der Einkapselung (4) eingearbeitet.

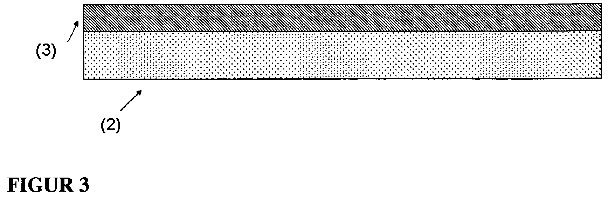

Figur 3 zeigt einen Querschnitt des optisch transparenten Sensorfelds (2). Die hydrophile Beschichtung (3) ist dabei direkt auf der Scheibenoberfläche aufgetragen.

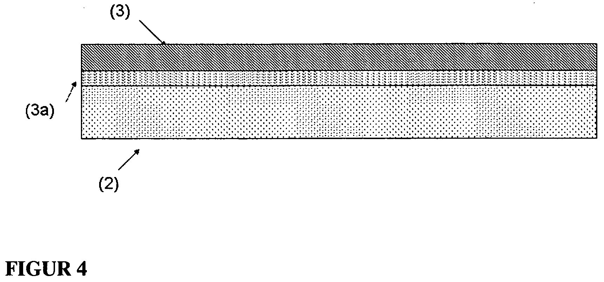

Figur 4 zeigt einen Querschnitt einer bevorzugten Ausführungsform des optisch transparenten Sensorfelds (2). Die hydrophile Beschichtung (3) ist auf einer Trägerfolie (3a) aufgebracht und auf dem Sensorfeld (2) befestigt. Der gezeigte Aufbau aus Sensorfeld (2), hydrophiler Beschichtung (3) und Trägerfolie (3a) weist bevorzugt keine elektrische Kontaktierung auf, da eine Beheizung des Sensorfelds (2) wegen der hydrophilen Beschichtung (3) nicht notwendig ist. Eine elektrische Kontaktierung ist nur für den in Figur 4 nicht gezeigten Sensor (5) notwendig.

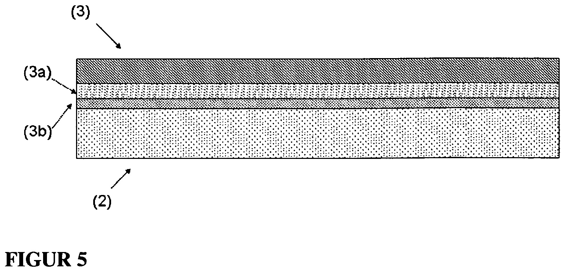

Figur 5 zeigt einen weiteren Querschnitt einer bevorzugten Ausführungsform des optisch transparenten Sensorfeldes (2). Die hydrophile Beschichtung (3) ist auf einer Trägerfolie (3a) aufgebracht und auf dem Sensorfeld (2) über eine optisch transparente Klebeschicht (3b) befestigt.

### Bezugszeichenliste

- (1): erfindungsgemäße Scheibe
- (2): optisch transparentes Sensorfeld
- (3): hydrophile Beschichtung
- (3a): Trägerfolie
- (3b): Klebeschicht
- (4): Einkapselung
- (5): Sensor
- (6): Trockenmittel

## Patentansprüche

1. Scheibe in Form einer Windschutzscheibe oder Heckscheibe eines Fahrzeuges mit optisch transparenten Sensorfeld, umfassend:
a) mindestens eine Scheibe (1),
b) mindestens ein optisch transparentes Sensorfeld (2) auf der Scheibe (1),
c) mindestens eine auf dem optisch transparenten Sensorfeld (2) angebrachte hydrophile Beschichtung (3), die auf der Scheibeninnenseite angeordnet ist, und
d) mindestens eine an dem optisch transparenten Sensorfeld (2) angebrachte Einkapselung (4) und mindestens einen in der Einkapselung (4) angebrachten Sensor (5),
wobei die hydrophile Beschichtung (3) eine Schichtdicke von 10 nm bis 50 µm aufweist.

2. Scheibe nach Anspruch 1, wobei das Sensorfeld (2) einen opaken und/oder farbigen Rand aufweist.

3. Scheibe nach Anspruch 1 oder 2, wobei das Sensorfeld (2) eine optische Transparenz für sichtbares Licht und/oder Infrarotstrahlung von > 60 %, bevorzugt > 70 %, aufweist.

4. Scheibe nach einem der Ansprüche 1 bis 3, wobei die hydrophile Beschichtung (3) Polymere mit COH, COOH, NH, NH₂, COONH, SO₃, SO₂, CN, OCN, SCN Gruppen, besonders bevorzugt Acrylsäureester, Polyethylenglykole, Polysaccharide, Polypeptide, Polyurethane, Polyether, Polyvinylbutyral, Polyvinylpyrrolidon, Silane, silanhaltige Polymere Copolymere und/oder Gemische davon enthält.

5. Scheibe nach einem der Ansprüche 1 bis 4, wobei die hydrophile Beschichtung (3) oberflächenabsorbierte hydrophile Partikel, bevorzugt TiO₂, besonders bevorzugt oberflächenabsorbierte hydrophile Partikel mit einer mittleren Partikelgröße von 2 nm bis 1 µm, bevorzugt 10 nm bis 300 nm, enthält.

6. Scheibe nach einem der Ansprüche 1 bis 5, wobei die hydrophile Beschichtung (3) eine Schichtdicke von 100 nm bis 25 µm aufweist.

7. Scheibe nach einem der Ansprüche 1 bis 6, wobei die hydrophile Beschichtung (3) einen Kontaktwinkel gegenüber Wasser von < 25°, bevorzugt < 15°, aufweist.

8. Scheibe nach einem der Ansprüche 1 bis 7, wobei die hydrophile Beschichtung (3) eine antistatische Beschichtung, bevorzugt quaternäre Ammoniumverbindungen, Silber, Kupfer, Zinn, Gold, Aluminium, Eisen, Wolfram, Chrom oder Legierungen davon und/oder ein leitfähiges organisches Polymer enthält.

9. Scheibe nach einem der Ansprüche 1 bis 8, wobei die hydrophile Beschichtung (3) eine Trägerfolie (3a) enthält.

10. Scheibe nach Anspruch 9, wobei die Trägerfolie (3a) eine optische Transparenz für sichtbares Licht und/oder Infrarotstrahlung von > 80 %, bevorzugt > 90 % aufweist.

11. Scheibe nach einem der Ansprüche 1 bis 10, wobei die Einkapselung (4) im oberen Bereich der Windschutzscheibe, bevorzugt hinter einem Abdeckstreifen, angebracht ist.

12. Scheibe nach einem der Ansprüche 1 bis 11, wobei die Einkapselung (4) Trockenmittel (6), bevorzugt Kieselgel, CaCl₂, Na₂SO₄ Aktivkohle, Silikate, Bentonite und/oder Zeolithe enthält.

13. Verfahren zur Herstellung einer Scheibe mit optisch transparenten Sensorfeld nach einem der Ansprüche 1 bis 12, wobei
a) eine hydrophile Beschichtung (3) auf einem Sensorfeld (2) einer Scheibe (1) aufgebracht wird,
b) eine Einkapselung (4) mit einem Sensor (5) an der hydrophilen Beschichtung (3) befestigt wird.

14. Verfahren nach Anspruch 13, wobei die hydrophile Beschichtung (3) über eine Trägerfolie (3a) aufgebracht wird.

15. Verwendung der Scheibe mit optisch transparentem Sensorfeld (2) nach einem der Ansprüche 1 bis 12 in Fahrzeugen, Schiffen, Flugzeugen und Hubschraubern.

## Claims

1. Pane in the form of a windshield or rear window of a motor vehicle with an optically transparent sensor field, comprising:
a) at least one pane (1),
b) at least one optically transparent sensor field (2) on the pane (1),
c) at least one hydrophilic coating (3) applied on the optically transparent sensor field (2), which coating is arranged on the interior-side of the pane, and
d) at least one encapsulation (4) applied on the optically transparent sensor field (2) and at least one sensor (5) applied in the encapsulation (4),
wherein the hydrophilic coating (3) has a layer thickness of 10 nm to 50 µm.

2. Pane according to claim 1, wherein the sensor field (2) has an opaque and/or colored border.

3. Pane according to claim 1 or 2, wherein the sensor field (2) has optical transparency to visible light and/or infrared radiation of > 60 %, preferably > 70 %.

4. Pane according to one of claims 1 through 3, wherein the hydrophilic coating (3) contains polymers with COH, COOH, NH, NH₂, COONH, SO₃, SO₂, CN, OCN, SCN groups, particularly preferably acrylic acid esters, polyethylene glycols, polysaccharides, polypeptides, polyurethanes, polyethers, polyvinyl butyral, polyvinyl pyrrolidone, silanes, silane-containing polymers, copolymers, and/or mixtures thereof.

5. Pane according to one of claims 1 through 4, wherein the hydrophilic coating (3) contains surface-absorbed hydrophilic particles, preferably TiO₂, particularly preferably surface-absorbed hydrophilic particles with a mean particle size of 2 nm to 1 µm, preferably 10 nm to 300 nm.

6. Pane according to one of claims 1 through 5, wherein the hydrophilic coating (3) has a layer thickness of 100 nm to 25 µm.

7. Pane according to one of claims 1 through 6, wherein the hydrophilic coating (3) has a contact angle against water of < 25°, preferably < 15°.

8. Pane according to one of claims 1 through 7, wherein the hydrophilic coating (3) includes an antistatic coating, preferably quaternary ammonium compounds, silver, copper, tin, gold, aluminum, iron, tungsten, chromium, or alloys thereof and/or a conductive organic polymer.

9. Pane according to one of claims 1 through 8, wherein the hydrophilic coating (3) includes a carrier film (3a).

10. Pane according to claim 9, wherein the carrier film (3a) has optical transparency to visible light and/or infrared radiation of > 80 %, preferably > 90 %.

11. Pane according to one of claims 1 through 10, wherein the encapsulation (4) is applied in the upper region of the windshield, preferably behind a masking strip.

12. Pane according to one of claims 1 through 11, wherein the encapsulation (4) contains desiccants (6), preferably silica gel, CaCl₂, Na₂SO₄ activated charcoal, silicates, bentonites, and/or zeolites.

13. Method for producing a pane with an optically transparent sensor field according to one of claims 1 through 12, wherein
a) a hydrophilic coating (3) is applied on a sensor field (2) of a pane (1),
b) an encapsulation (4) with a sensor (5) is affixed on the hydrophilic coating (3).

14. Method according to claim 13, wherein the hydrophilic coating (3) is applied via a carrier film (3a).

15. Use of the pane with an optically transparent sensor field (2) according to one of claims 1 through 12 in motor vehicles, watercraft, airplanes, and helicopters.

## Revendications

1. Vitre sous forme d'un pare-brise ou d'une lunette arrière d'un véhicule ayant un champ de détection optiquement transparent, comprenant :
a) au moins une vitre (1) ;
b) au moins un champ de détection (2) optiquement transparent sur la vitre (1);
c) au moins un revêtement hydrophile (3) qui est appliqué sur le champ de détection (2) optiquement transparent et qui est disposé sur le côté intérieur de la vitre ; et
d) au moins un encapsulage (4) appliqué sur le champ de détection (2) optiquement transparent et au moins un capteur (5) installé dans l'encapsulage (4),
le revêtement hydrophile (3) présentant une épaisseur de couche de 10 nm à 50 µm.

2. Vitre selon la revendication 1, dans laquelle le champ de détection (2) présente une bordure opaque et/ou colorée.

3. Vitre selon l'une des revendications 1 ou 2, dans laquelle le champ de détection (2) présente une transparence optique à la lumière visible et/ou au rayonnement infrarouge de > 60%, de préférence > 70%.

4. Vitre selon l'une des revendications 1 à 3, dans laquelle le revêtement hydrophile (3) contient des polymères ayant des groupes COH, COOH, NH, NH₂, COONH, SO₃, SO₂, CN, OCN, SCN, de façon particulièrement préférée des esters d'acide acrylique, des polyéthylène glycols, des polysaccharides, des polypeptides, des polyuréthanes, des polyéthers, du polyvinylbutyral, de la polyvinylpyrrolidone, des silanes, des polymères à teneur en silane et/ou des copolymères et/ou mélanges de ceux-ci.

5. Vitre selon l'une des revendications 1 à 4, dans laquelle le revêtement hydrophile (3) contient des particules hydrophiles absorbées en surface, de préférence de TiO₂, de manière particulièrement préférée des particules hydrophiles absorbées en surface ayant une dimension moyenne de particule de 2 nm à 1 µm, de préférence de 10 nm à 300 nm.

6. Vitre selon l'une des revendications 1 à 5, dans laquelle le revêtement hydrophile (3) présente une épaisseur de couche de 100 nm à 25 µm.

7. Vitre selon l'une des revendications 1 à 6, dans laquelle le revêtement hydrophile (3) présente un angle de contact avec l'eau de < 25°, de préférence < 15°.

8. Vitre selon l'une des revendications 1 à 7, dans laquelle le revêtement hydrophile (3) contient un revêtement antistatique, de préférence des composés d'ammonium quaternaire, de l'argent, du cuivre, de l'étain, de l'or, de l'aluminium, du fer, du tungstène, du chrome ou leurs alliages et/ou un polymère organique conducteur.

9. Vitre selon l'une des revendications 1 à 8, dans laquelle le revêtement hydrophile (3) contient une feuille de support (3a).

10. Vitre selon la revendication 9, dans laquelle la feuille de support (3a) présente une transparence optique à la lumière visible et/ou au rayonnement infrarouge de > 80%, de préférence > 90%.

11. Vitre selon l'une des revendications 1 à 10, dans laquelle l'encapsulage (4) est appliqué dans la région supérieure du pare-brise, de préférence sous une bande de recouvrement.

12. Vitre selon l'une des revendications 1 à 11, dans laquelle l'encapsulage (4) contient des agents déshydratants (6), de préférence du gel de silice, CaCl₂, Na₂SO₄ du charbon actif, des silicates, des bentonites et/ou des zéolites.

13. Procédé de fabrication d'une vitre ayant un champ de détection optiquement transparent selon l'une des revendications 1 à 12, dans lequel :
a) un revêtement hydrophile (3) est appliqué sur un champ de détection (2) d'une vitre (1),
b) un encapsulage (4) ayant un capteur (5) est fixé sur le revêtement hydrophile (3).

14. Procédé selon la revendication 13, dans lequel le revêtement hydrophile (3) est appliqué sur une feuille de support (3a).

15. Utilisation de la vitre ayant un champ de détection (2) optiquement transparent selon l'une des revendications 1 à 12 dans des véhicules, des bateaux, des avions et des hélicoptères.
